# EUROPÄISCHE PATENTSCHRIFT

(11) **EP 0 368 962 B1**
(45) Veröffentlichungstag und Bekanntmachung des Hinweises auf die Patenterteilung: **10.03.1993**
(21) Anmeldenummer: 89905386.2
(22) Anmeldetag: 18.05.1989
(51) Int. Cl.: B03B 9/04, B09B 3/00

(54) **VERFAHREN UND VORRICHTUNG ZUM REINIGEN VON SCHLACKE AUS ABFALLVERBRENNUNGSÖFEN**
PROCESS AND DEVICE FOR CLEANING SLAG FROM REFUSE INCINERATORS
PROCEDE ET INSTALLATION POUR L'EPURATION DES SCORIES D'UN FOUR D'INCINERATION DE DECHETS

(30) Priorität: 31.05.1988 CH 2070/88
(43) Veröffentlichungstag der Anmeldung: 23.05.1990
(73) Patentinhaber: LEO SCHWYTER AG, CH-8486 Rikon im Tösstal (CH)
(72) Erfinder: SCHWYTER, Leo, CH-8370 Sirnach (CH)
(74) Vertreter: Bruderer, Werner
(86) Internationale Anmeldenummer: CH8900089
(87) Internationale Veröffentlichungsnummer: WO8911912

(56) Entgegenhaltungen:
- DE-A- 2 423 891
- DE-A- 3 626 885
- DE-A- 3 700 608
- DE-C- 3 146 809
- DE-C- 3 223 689

## Beschreibung

Die Erfindung betrifft ein Verfahren zum Entfernen von Schadstoffen und Verunreinigungen aus der Schlacke von Kehricht- und Abfallverbrennungsöfen, wobei die Schlacke nach dem Austritt aus dem Verbrennungsofen mit Wasser abgelöscht und dann getrocknet wird und die Staubanteile aus der Schlacke ausgeschieden werden sowie eine Vorrichtung zur Durchführung des Verfahrens und eine Verwendung der nach diesem Verfahren gereinigten Schlacke.

Die Nachbehandlung von Schlacke aus Abfallverbrennungsprozessen ist bekannt. In der Zeitschrift Umweltmagazin, November 1985, Seiten 30 - 32, ist ein Prozess zur Minimierung der Schlackenmenge beschrieben. Bei diesem Verfahren ist unterhalb der Feuerung, d.h. am Ende des Feuerungsrostes ein sogenannter Nassentschlacker angeordnet, in welchem die Schlacke abgekühlt wird. Es wird auch darauf hingewiesen, dass im Rahmen der Nassentschlackung eine Absenkung des Schwermetallgehaltes in der Schlacke erfolgt. Diese Absenkung des Schwermetallgehaltes ist jedoch ungenügend, und es verbleiben erhebliche Anteile von Schadstoffen in der Schlacke. Bei zu langer Verweildauer im Nassentschlacker zerfällt die Schlacke, und es ergeben sich zusätzliche Schwierigkeiten bei der Handhabung. Die Verwendung eines Nassentschlackers ist auch bei anderen Anlagen seit längerer Zeit bekannt, wobei dazu in vielen Fällen ein wassergefüllter Schlackenkanal dient. Von diesem wassergefüllten Schlackenkanal wird die abgekühlte Schlacke in einen Schlackenbunker ausgetragen und bis zur endgültigen Deponie gelagert. Infolge des hohen Wassergehaltes der Schlacke ergeben sich hohe Lager- und Transportgewichte und in der Folge hohe Entsorgungskosten.

Infolge der grossen Mengen von Kehricht und Abfall, welche in Abfallverbrennungsanlagen anfallen, entstehen auch sehr grosse Mengen von Schlacke. Diese Schlacke wird zumeist in Deponien abgelagert. In einigen Fällen wurde Schlacke aus Abfallverbrennungsanlagen auch für den Einsatz im Strassenbau oder als Füllmaterial in Lärmschutzwänden verwendet. Ca. 30 % des Gewichtes der in die Verbrennungsanlage eingebrachten Abfallmenge fällt am Ende des Verbrennungsprozesses als Schlacke an. Die Deponie oder die Verwendung dieser Schlacke als Strassenbaumaterial ist keineswegs unbedenklich, da in der Schlacke noch erhebliche Mengen von löslichen Schadstoffen enthalten sind. Je nach Zusammensetzung des verbrannten Abfalles enthält die Schlacke unterschiedliche Mengen dieser Schadstoffe. Im Durchschnitt dürfte sich der Schadstoffgehalt von Schlacken aus Hausmüllverbrennungsanlagen im Bereiche von ca. 50 bis 100 g pro kg Schlacke bewegen. Die in der Schlacke enthaltenen Schadstoffe sind dabei insbesondere Chlorid, Blei, Kadmium, Zink, Eisen, Kupfer und andere Verunreinigungen. Entsprechende Analysen sind beispielsweise in der Publikation Schweizer Ingenieur und Architekt, Heft 19, 1983, veröffentlicht. Bei der Ablagerung von Schlacken aus Abfallverbrennungsanlagen in Deponien müssen die Sickerwässer aufgefangen und entsorgt werden, da sie sonst eine erhebliche Gefährdung der Umwelt darstellen. Entsprechende Probleme treten auch bei der Verwendung von Schlacke im Strassenbau auf, weshalb die Schlacke in diesen Fällen sehr oft mit Zement vermischt und wasserundurchlässig gemacht wird. Da die zur Verfügung stehenden Deponien für Schlacke in immer geringerem Umfange zur Verfügung stehen, bereitet die Ablagerung der Schlacke grosse Probleme. Auch die Verwendung im Strassenbau ist durch den bisher hohen Schadstoffgehalt auf vereinzelte Anwendungsgebiete beschränkt

In der Publikation: Stuttgarter Berichte zur Abfallwirtschaft, Berlin, 1984, S. 221 - 246, wird beschrieben, dass der Hauptanteil wasserlöslicher Schadstoffe im Flugstaub konzentriert ist, und es wird empfohlen, z.B. im Wegebau nur staubfreie Schlacke zu verwenden. In der Publikation DE 37 00 608 A1 wird ein Verfahren und eine Vorrichtung zur Schlackenaufbereitung beschrieben, bei welchem nach dem Abschrecken der Schlacke im Wasserbad Feinanteile mit einem Korn bis 1 mm aus der Schlacke entfernt werden. Die verbleibende Schlacke weist einen reduzierten Schadstoffgehalt auf und ist für den Strassen- und Wegebau oder für Aschebeton einsetzbar. Die bekannten Verfahren zur Reinigung der Schlacke vermögen die steigenden Ansprüche noch nicht zu befriedigen. Die gereinigte Schlacke enthält weiterhin Restteile von wasserlöslichen Schadstoffen. Der Chloridgehalt kann z.B. immer noch bis 50 % des ursprünglichen Gehaltes betragen. Nachteilig ist auch der Umstand, dass die Schlacke nach dem Abschrecken im Wasserbad abgelagert werden muss und damit erhebliche Lagervolumen notwendig sind. Die Schadstoffe des Staubanteiles werden durch das Abschreckbad in die Schlacke geschwemmt und haften nach dem Trocknen in den Poren. Die vorgeschlagene Trocknung auf eine Restfeuchte von 1 % erfordert bei den grossen Mengen von Schlacke einen sehr hohen Energieaufwand. Die gereinigte Schlacke ist bei diesem hohen Trocknungsgrad als Baumaterial nicht geeignet und muss z.B. für den Wege- und Strassenbau wieder befeuchtet werden.

Aus DE-3 626 885 A1 ist ein Verfahren zur Behandlung von Müllverbrennungsrückständen bekannt, bei welchem die Verbrennungsrückstände direkt nach der Verbrennung einer sauren Wäsche mit einem pH-Wert von etwa 2 unterworfen werden. Die gewaschenen Rückstände erfahren keine weitere Behandlung. Es wird jedoch nicht beschrieben, welchen Reinigungseffekt dieses Verfahren hat. Aufgrund des übrigen Standes der Technik ist offensichtlich, dass der Schadstoffgehalt weiterhin über den für die Weiterverwertung oder die normale Deponie zulässigen Werten liegt. Zudem ist das Verfahren, bzw. der pH-Wert der Waschflüssigkeit, nur mit grossem Aufwand zu kontrollieren, und die saure Waschflüssigkeit verursacht erhebliche Korrosionsprobleme an der Anlage.

Es ist deshalb Aufgabe der vorliegenden Erfindung, ein Verfahren aufzuzeigen, mit welchem die in Abfallverbrennungsanlagen anfallende Schlacke von allen darin enthaltenen löslichen Schadstoffen und Staubteilen gereinigt und so aufbereitet werden kann, dass sie ohne Gefährdung der Umwelt als Baustoff verwendet werden kann. Der Gehalt an Schadstoffen soll möglichst klein sein. Das Verfahren soll die Behandlung der Schlacke direkt nach dem Austritt aus der Verbrennungsanlage ohne Zwischenlagerung zulassen. Die Vorrichtung zur Durchführung dieses Verfahrens soll einfach aufgebaut sein und eine praktisch vollständige Entfernung der Schadstoffe aus der Schlacke ermöglichen. Nach dem Durchlauf des Verfahrens und der Vorrichtung soll die Schlacke direkt der Verwendung als Baustoff zugeführt werden können.

Diese Aufgabe wird nach dem erfindungsgemässen Verfahren dadurch gelöst, dass die Schlacke mit zusätzlichem etwa neutralem Waschwasser vermischt wird, Schadstoffe und ein Teil der Feinanteile aus der Schlacke ausgewaschen werden, Schlacke und Waschwasser voneinander getrennt werden, und die Schlacke auf einen Wassergehalt von maximal 20 % getrocknet wird und die restlichen Feinanteile mit einer Korngrösse von maximal 2 mm von der Schlacke getrennt und entfernt werden.

Bei Anwendung dieses Verfahrens entsteht eine gereinigte Schlacke, welche nur noch einen Schadstoffanteil von 10 bis 30 % der ursprünglich nach dem Nassentschlacken noch vorhandenen Menge aufweist. Die tiefsten Restwerte werden bei intensivem Waschen erreicht und liegen erheblich unter den Richtwerten für den Strassenbau. Die in der Schlacke noch vorhandenen Schadstoffe liegen praktisch vollständig in einer gebundenen, d.h. nicht wasserlöslichen Form vor, so dass sie bei einer Weiterverwendung der Schlacke die Umwelt nicht gefährden. Der Waschprozess ist relativ rasch und leicht durchführbar und ergibt gegenüber dem bekannten Verfahren eine erhebliche Zeit- und Energie-Ersparnis.

Eine bevorzugte Ausführungsform des erfindungsgemässen Verfahrens ist dadurch gekennzeichnet, dass die zusätzlich mit der Schlacke vermischte Waschwassermenge mindestens das Dreifache des Gewichtes der Schlacke beträgt und/oder das zusätzliche Waschwasser, welches mit der Schlacke vermischt wird, auf maximal 90° C erwärmt wird. Es hat sich auch als zweckmässig erwiesen, dass dem zusätzlichen Waschwasser Lösungs- und/oder Bindemittel beigegeben werden. Die Anwendung dieser vorteilhaften Lösung ermöglicht in einem weiten Bereich Anpassungen an die unterschiedliche Zusammensetzung von Schlacken aus Abfallverbrennungsöfen.

Im weiteren besteht eine bevorzugte Ausführungsform darin, dass zuerst das ungebundene Wasser von der Schlacke getrennt und anschliessend die Schlacke in einem Trocknungsprozess auf den Wassergehalt von maximal 20 % getrocknet wird. Diese Aufteilung des Abtrennverfahrens für das zusätzliche Waschwasser von der Schlacke ermöglicht eine Einsparung von Trocknungsenergie, da das ungebundene Waschwasser z.B. durch Abtropfen oder Abschleudern von der Schlacke getrennt werden kann. Die Trocknung der Schlacke auf einen Wassergehalt von maximal 20 % erfordert in den meisten Fällen die Anwendung von zusätzlicher Energie, indem die Schlacke Unterdruck oder Wärme ausgesetzt wird. In einfacher Weise kann der Trocknungsprozess zur Verbesserung der Schlackenreinigung eingesetzt werden, indem während des Trocknungsprozesses der Schlacke unverbrannte Klein- und Leichtteile verbrannt oder verglüht werden. In einfachster und bekannter Weise geschieht dies durch die Anwendung eines Trocknungsprozesses mit offenen Flammen.

Eine weitere Verbesserung des Verfahrens lässt sich dadurch erreichen, dass die Feinanteile gleichzeitig mit dem Trocknen und/oder anschliessend an das Trocknen von der Schlacke getrennt werden. In den Feinanteilen der Schlacke mit einer Korngrösse von maximal 2 mm ist ein Grossteil der Schadstoffe enthalten, z.B. ca. 75 % des Bleis oder ca. 80 % des Kadmiums. Es hat sich im weiteren auch als vorteilhaft erwiesen, dass der Schlacke nach dem Entfernen der Feinanteile Zuschlagsstoffe beigemengt werden. Diese Zuschlagsstoffe verbessern die Eigenschaften der Schlacke zur Weiterverwendung oder dienen als Bindemittel für allfällig noch vorhandene kleine Restanteile von löslichen Schadstoffen.

In vorteilhafter Weise werden unverbranntes Grobgut und magnetische Teile vor dem Vermischen mit dem zusätzlichen Waschwasser und/oder vor dem Trocknen aus der Schlacke entfernt. Das unverbrannte Grobgut und die magnetischen Teile belasten das Reinigungsverfahren, da sie einen Gewichtsanteil von 10 bis 20 % der im Schlackenkanal nach der Verbrennung im Ofen anfallenden Schlackenmenge ausmachen können. Es ist deshalb zweckmässig, diese Anteile im Schlakkengut so früh als möglich, insbesondere vor der Einbringung von zusätzlicher Energie, aus der behandelten Schlakkenmasse zu entfernen.

Die Vorrichtung zur Durchführung des erfindungsgemässen Verfahrens umfasst mindestens eine Metallabscheidung, eine Trocknungseinrichtung und eine Klassiereinrichtung und ist dadurch gekennzeichnet, dass sie eine Wascheinheit zur Vermischung der Schlacke mit Waschwasser, eine Trenneinrichtung zur Abscheidung von Waschwasser und Schlamm von der Schlacke, eine Trocknungseinrichtung zur Trocknung der Schlacke, eine Fraktioniereinheit zur Fraktionierung der Schlacke in eine erste Klasse von Staub und einem Korn bis 2 mm und eine zweite Klasse von grösserem Korn, und mindestens einen Grobgut-Abscheider sowie mindestens eine Magnetabscheidevorrichtung zur Abtrennung von magnetischen Stoffen aufweist und alle Baugruppen über Fördereinrichtungen miteinander verbunden sind. Im weiteren besteht eine bevorzugte Ausführungsform darin, dass ein Grobgut-Abscheider und ein Magnetabscheider vor der Wascheinheit angeordnet sind, die Abtrenneinrichtung für das Waschwasser in und/oder direkt nach der Wascheinheit angeordnet ist, diese Abtrenneinrichtung eine gemeinsame Baugruppe mit der Fraktioniereinheit zur Abscheidung der Feinanteile der Schlacke bildet und anschliessend die Trocknungseinrichtung angeordnet ist. Die erfindungsgemässe Vorrichtung ermöglicht die Verarbeitung von Schlacke aus Abfallverbrennungsöfen, welche vom Wasserbad im Schlackenkanal ausgetragen wird. Die Vorrichtung kann dabei direkt an die Austragvorrichtung anschliessen oder die Schlacke wird vorerst in einem Bunker eingelagert und später der Verarbeitung in der beschriebenen Anlage zugeführt. Die in der Anlage verwendeten Baueinheiten sind bekannte Vorrichtungen, wie sie bei der Verarbeitung von Kies und Sand für den Hoch- und Tiefbau oder bei der Wiederaufbereitung von Giessand Verwendung finden.

Dabei ist es zweckmässig, wenn die Wascheinheit ein Wasserbad mit einem Schwertwellenwäscher oder einem Trommelwäscher ist und die Trenneinrichtung zur Abtrennung von Waschwasser und Schlamm aus einer Entwässerungsrinne oder einer Schubzentrifuge besteht. Es ist im weiteren zweckmässig, wenn die Trocknungseinrichtung eine Trocknungstrommel mit einer Brenn- oder Glüheinrichtung ist, und die Fraktioniereinheit ein Vibrationssieb mit einer Maschenweite von maximal 2 mm und einer Absaugvorrichtung ist. Eine weitere Verbesserung der Vorrichtung lässt sich dadurch erreichen, dass die Fraktioniereinheit ein Windsichter ist. In einfacher Weise kann die Vorrichtung kompakter ausgebildet werden, wenn die Trocknungseinrichtung und die Fraktioniereinheit in einer kombinierten Baugruppe zusammengefasst sind. Die Abscheidung von Grobgut erfolgt in vorteilhafter Weise dadurch, dass der Grobgut-Abscheider ein Sieb oder eine Rüttelrinne ist.

Gegenstand der vorliegenden Erfindung ist ausserdem eine Verwendung der erfindungsgemäss gereinigten mit einer Korngrösse grösser als 2 mm Schlacke als Baumaterial. Dieses Baumaterial kann im Strassen- und Wegbau, für Lärmdämmwände oder andere Bauwerke verwendet werden.

Im folgenden wird die Erfindung anhand von Ausführungsbeispielen unter Bezugnahme auf die beiliegenden Zeichnungen näher erläutert. Es zeigen:
Fig. 1 die schematische Darstellung einer aus einzelnen Baugruppen zusammengestellten Schlackenreinigungs-Vorrichtung, und
Fig. 2 die schematische Darstellung einer als Kompaktanlage ausgebildeten Schlackenreinigungs-Vorrichtung.

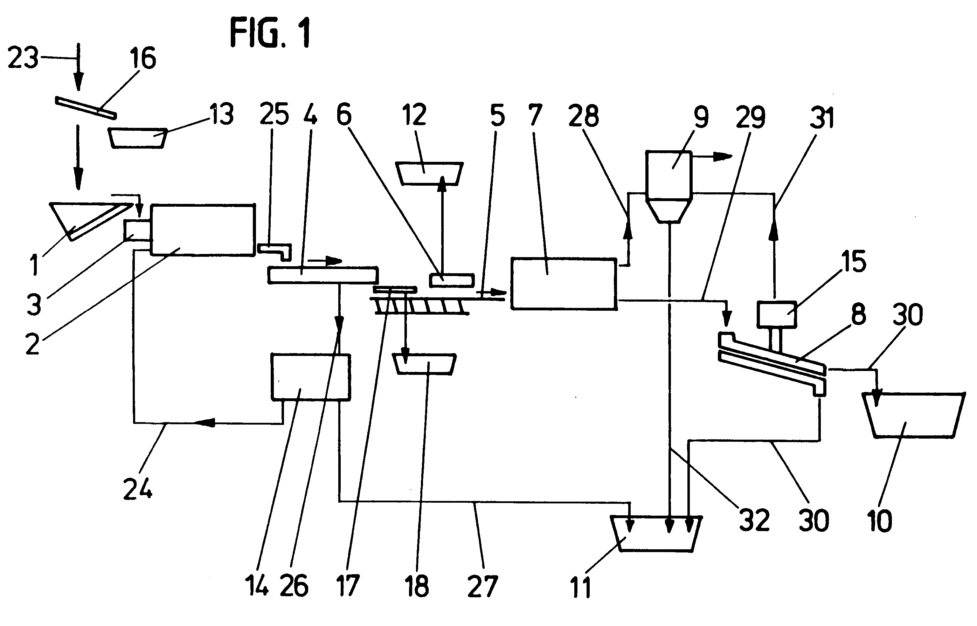

Die in Figur 1 schematisch dargestellte Vorrichtung bzw. Anlage zur Reinigung von Schlacke aus Abfallverbrennungsöfen zeigt die einzelnen Komponenten und den Prozessablauf des entsprechenden Verfahrens. Die aus einer nicht dargestellten Abfallverbrennungsanlage ausgestossene Schlacke wird bei der Stelle 23 auf einen Grobgut-Abscheider 16 aufgegeben. Dieser Grobgut-Abscheider besteht im dargestellten Beispiel aus einem groben Rechen oder Sieb, welcher bei Bedarf gerüttelt werden kann. Unverbrannte Grobteile und grosse Metallreste werden von diesem Grobgut-Abscheider aufgefangen und fallen in eine Grobgut-Sammelmulde 13. Die Schlacke selbst fällt durch den Grobgut-Abscheider 16 hindurch in einen Sammelbunker 1. Von diesem Sammelbunker 1 gelangt die Schlacke über eine Aufgabeeinheit 3 in eine Waschtrommel 2. Diese Waschtrommel 2 wird kontinuierlich betrieben, und die Schlacke wird hier intensiv mit Waschwasser vermengt. Das Waschwasser wird der Waschtrommel 2 über die Leitung 24 zugeführt. Dabei wird die Wassermenge so dimensioniert, dass im dargestellten Beispiel pro Zeiteinheit eine Wassermenge durch die Waschtrommel fliesst, welche das dreifache Gewicht der in der gleichen Zeiteinheit durchgesetzten Schlacke aufweist. Am Ausgang der Waschtrommel 2 gelangt die Schlacke über die Rinne 25 in eine Entwässerungsrinne 4. In dieser Entwässerungsrinne 4 wird das ungebundene Waschwasser, d.h. vor allem das Tropfwasser, von der nassen Schlacke getrennt und über eine Leitung 26 einer Reinigungseinrichtung 14 zugefügt. In der Reinigungseinrichtung 14 wird das Waschwasser aufbereitet, d.h. von Feinpartikeln und Schlamm befreit und soweit nötig neutralisiert, und dann über die Leitung 24 wieder in den Kreislauf zurückgeführt. Die vom Wasser abgetrennten Feinpartikeln und der Schlamm werden über die Leitung 27 in einen Schadstoffbunker 11 ausgetragen. Bereits durch diesen Waschprozess werden erhebliche Schadstoffanteile aus der Schlacke entfernt. Dabei wird die Schlacke infolge des schonenden Waschvorganges in der Waschtrommel 2 in ihrer Struktur nicht geschädigt, und es erfolgt auch keine Auflösung und Aufweichung von weiteren Schlackenanteilen.

Von der Entwässerungsrinne 4 gelangt die gewaschene Schlacke auf einen weiteren Grobgut-Abscheider 17. Dieser Grobgut-Abscheider 17 wird eingebaut, wenn eine sehr gute Qualität der Schlacke gewünscht wird, und er wird dann so ausgebildet, dass Teile, welche durch den ersten Grobgut-Abscheider 16 durchgefallen sind, hier aufgehalten werden. Das auf dem Grobgut-Abscheider 17 noch anfallende Grobgut gelangt in eine Grobgut-Sammelmulde 18 und die Schlacke auf die Förderrinne 5. Ueber der Förderrinne 5 ist ein Magnetabscheider 6 angeordnet, welcher alle magnetischen Bestandteile, d.h. alle eisenhaltigen Teile, aus der Schlacke entfernt. Die vom Magnetabscheider 6 aus der Schlacke abgetrennten magnetischen Teile gelangen in eine Eisen-Sammelmulde 12. Von der Förderrinne 5 gelangt nun die Schlacke in einen Trommeltrockner und wird hier so weit getrocknet, bis ihr Wassergehalt maximal 20 Gewichtsprozente beträgt. Diese Reduktion des Wassergehaltes ist notwendig, um das Transportgewicht der gereinigten Schlacke zu verringern. Zur Trocknung der Schlacke wird im dargestellten Beispiel Heissluft verwendet, welche im Rahmen des Abfallverbrennungsprozesses erwärmt und durch zusätzliche Wärmeeinheiten aufbereitet wird. Der Trommeltrockner wird zusätzlich von einem Brenner beheizt, dessen offene Flamme in den Innenraum des Trockners geblasen wird und der Erzeugung der Heissluft dient. Die hohe Temperatur bewirkt, dass brennbare Kleinteile noch verbrannt oder verglüht werden. Dies erlaubt eine Reduktion des Ausbrandverlustes der Schlacke. Die im Trocknungsprozess des Trommeltrockners 7 anfallende Abluft wird über die Leitung 28 in einen Filter 9 geführt und von Schwebeteilen und Staubpartikeln befreit. Am Ende des Trommeltrockners 7 wird die nun trockene Schlacke über die Förderleitung 29 in eine Fraktioniereinheit 8 geführt. Diese Fraktioniereinheit 8 besteht aus einem Vibrationssieb mit einer Maschenweite von maximal 2 mm. Alle Schlackenbestandteile, welche kleiner als 2 mm sind, fallen durch dieses Sieb hindurch und werden über die Leitung 30 in den Schadstoffbunker 11 geführt. An der Fraktioniereinheit 8 ist eine Absaugvorrichtung 15 angeordnet, welche Luft durch den Schlackenstrom saugt, und zusätzlich Feinpartikeln, welche kleiner als 2 mm sind, aus der Schlacke absaugt und über die Leitung 31 in den Filter 9 führt. Die im Filter 9 aus der Luft abgetrennten Schwebeteile und Feinpartikeln gelangen über die Leitung 32 ebenfalls in den Schadstoffbunker 11. Vom Ausgang der Fraktioniereinheit 8 wird die gereinigte Schlacke über eine Fördereinheit 33 in einen Schlackenbunker 10 ausgetragen.

Die im Schlackenbunker 10 gesammelte Schlacke enthält von den an der Aufgabestelle 23 ursprünglich enthaltenen Schadstoffen nur noch einen Anteil von ca. 10 bis 30 %. Dieser Restanteil ist vollständig in grössere Schlackenkörper eingebunden oder ist chemische Verbindungen mit anderen Stoffen eingegangen, welche unschädlich und insbesondere wasserunlöslich sind. Die im Bunker 10 anfallende gereinigte Schlacke ist deshalb sowohl im Rahmen einer Deponie als auch bei Verwendung als Baustoff unproblematisch und stellt keine Gefahr für die Umwelt dar. Die ursprünglich in der Schlacke enthaltenen Schadstoffe sind im Schadstoffbunker 11 gesammelt. Dieser im Schadstoffbunker 11 anfallende Sonderabfall muss aufbereitet oder unter Kontrolle deponiert werden. Durch Veränderung der Waschwassermenge in der Waschtrommel 2 und Anpassung der Luftströmungs- und Fliessverhältnisse im Schlackenbett in der Fraktioniereinheit 8 und im Trommeltrockner 7 kann der Reinigungsgrad der Gesamtanlage verändert werden. In der Leitung 24 sind zusätzliche nicht dargestellte Vorrichtungen angeordnet, welche die Zugabe von Lösungs- oder Bindemitteln zum Waschwasser ermöglichen. Die Zugabe derartiger Stoffe kann abhängig von der Zusammensetzung der in die Waschtrommel 2 eingegebenen Schlacke eine Verbesserung des Reinigungsprozesses bewirken. Die im Schadstoffbunker 11 anfallende Menge von schädlichem Abfall ist wesentlich kleiner als die ursprüngliche Schlackenmenge und liegt abhängig von der Zusammensetzung der Schlacke und vom Reinigungsgrad der Anlage etwa im Bereiche von 3 bis 10 % des ursprünglichen Schlackengewichtes. Weitere 10 bis 20 % des Gewichtes der bei 23 aufgegebenen Rohschlacke fällt in den Sammelmulden 12, 13 und 18 als Eisen oder Grobgut an und wird der Aufarbeitung und Wiederverwertung zugeführt. Das beschriebene Verfahren und die entsprechende Anlage ermöglichen somit eine kontrollierte Behandlung der Schlacke und eine Aufteilung in verwertbare Bestandteile. Den grössten Teil bildet dabei die gereinigte Schlacke mit einem Anteil von etwa 70 bis 85 % am ursprünglichen Schlackengewicht, wobei dieser grosse Anteil ohne Probleme als Baumaterial für Strassen, Wege, Lärmschutzwände und andere Bauwerke verwendet werden kann.

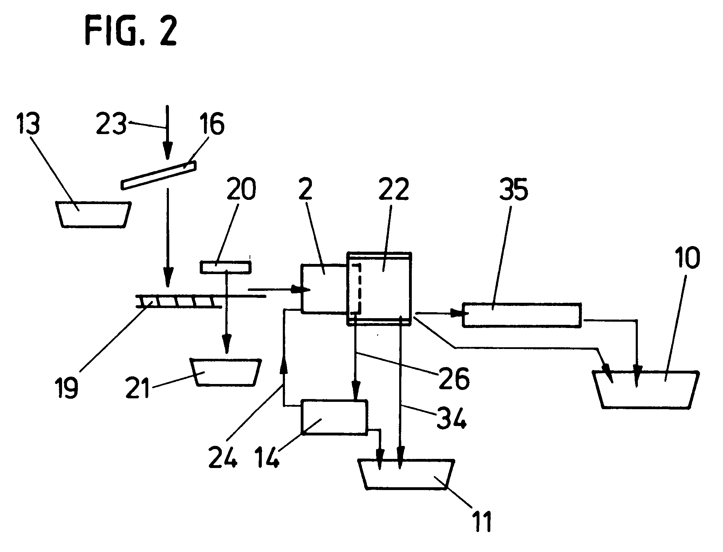

Die in Figur 2 schematisch dargestellte Anlage stellt eine Kompaktform der Reinigungsvorrichtung dar. Auch hier wird die von der Abfallverbrennungsanlage ausgetragene Schlacke an der Stelle 23 auf den Grobgut-Abscheider 16 aufgegeben. Vom Grobgut-Abscheider 16 fällt das Grobgut in die Grobgut-Sammelmulde 13 und die Schlacke auf eine Transportrinne 19. Im Bereiche dieser Transportrinne 19 ist ein Magnetabscheider 20 angeordnet, welcher alle eisenhaltigen Bestandteile aus dem Schlackenstrom entfernt und in die Eisen-Sammelmulde 21 befördert. Von der Transportrinne 19 gelangt die Schlacke in die Waschtrommel 2, welcher wie bei Figur 1 beschrieben über die Leitung 24 Waschwasser zugeführt wird. Direkt anschliessend an die Waschtrommel 2 und teilweise in diese eingreifend ist eine gemeinsame Baugruppe 22 angeordnet, welche die Abtrenneinrichtung für das Waschwasser und gleichzeitig die Fraktioniereinheit zur Abscheidung der Feinanteile der Schlacke beinhaltet. Bei der Baugruppe 22 handelt es sich um die Anwendung bekannter Baugruppen, beispielsweise in Form einer Zentrifuge in Kombination mit einem Rüttelsieb. Das in der Baugruppe 22 abgeschiedene Waschwasser gelangt über die Leitung 26 in die Reinigungsvorrichtung 14 für das Waschwasser und die Schlackenfraktion, welche kleiner als 2 mm ist, über die Förderleitung 34 in den Schadstoffbunker 11. Die in der gemeinsamen Baugruppe 22 behandelte Schlacke weist bereits einen relativ niedrigen Wasergehalt auf. Je nach Verwendungszweck kann sie direkt in den Schlackenbunker 10 ausgetragen oder zusätzlich über ein Trocknungsbett 35 geführt werden. Wird die gereinigte Schlacke als Baumaterial im Strassenbau verwendet, so sollte sie einen Feuchtigkeitsgehalt von ca. 10 % aufweisen, damit sie richtig verfestigt werden kann. Dieser Feuchtigkeitsgehalt kann durch die Verweildauer auf dem Trocknungsbett 35 eingestellt werden. Die in den Mulden 11, 13 und 21 anfallenden Abfallmengen bewegen sich auch bei dieser Anlage in den gleichen Gewichtsverhältnissen wie bei Figur 1 angegeben. Es ist zu beachten, dass die angegebenen Gewichtsanteile in einem erheblichen Bereich variieren können, und zwar insbesondere abhängig vom Wassergehalt der bei 23 aufgegebenen Schlacke, der Zusammensetzung des ursprünglich vorhandenen Kehrichts, bzw. Abfalls und der Qualität des Verbrennungsprozesses im Ofen.

## Patentansprüche

1. Verfahren zum Entfernen von Schadstoffen und Verunreinigungen aus der Schlacke von Kehricht- und Abfallverbrennungsöfen, wobei die Schlacke nach dem Austritt aus dem Verbrennungsofen mit Wasser abgelöscht und dann getrocknet wird und die Staubanteile aus der Schlacke ausgeschieden werden, dadurch gekennzeichnet, dass die Schlacke nach dem Ablöschen mit zusätzlichem etwa neutralem Waschwasser vermischt wird, Schadstoffe und ein Teil der Feinanteile aus der Schlacke ausgewaschen werden, Schlacke und Waschwasser voneinander getrennt werden und die Schlacke auf einen Wassergehalt von maximal 20 % getrocknet wird und die restlichen Feinanteile mit einer Korngrösse von maximal 2 mm, von der Schlacke getrennt und entfernt werden.

2. Verfahren nach Patentanspruch 1, dadurch gekennzeichnet, dass die zusätzliche mit der Schlacke vermischte Waschwassermenge mindestens das 3-fache des Gewichtes der Schlacke beträgt.

3. Verfahren nach einem der Patentansprüche 1 oder 2, dadurch gekennzeichnet, dass das zusätzliche Waschwasser, welches mit der Schlacke vermischt wird, auf maximal 90° C erwärmt wird.

4. Verfahren nach einem der Patentansprüche 1 bis 3, dadurch gekennzeichnet, dass dem zusätzlichen Waschwasser Lösungs- und/oder Bindemittel beigegeben werden.

5. Verfahren nach einem der Patentansprüche 1 bis 4, dadurch gekennzeichnet, dass zuerst das ungebundene Waschwasser von der Schlacke getrennt und anschliessend die Schlacke in einem Trocknungsprozess auf den Wassergehalt von maximal 20 % getrocknet wird.

6. Verfahren nach einem der Patentansprüche 1 bis 5, dadurch gekennzeichnet, dass während des Trocknungsprozesses der Schlacke unverbrannte Klein- und Leichtteile verbrannt oder verglüht werden.

7. Verfahren nach einem der Patentansprüche 1 bis 6, dadurch gekennzeichnet, dass die Feinanteile gleichzeitig mit dem Trocknen und/oder anschliessend an das Trocknen von der Schlacke getrennt werden.

8. Verfahren nach einem der Patentansprüche 1 bis 7, dadurch gekennzeichnet, dass der Schlacke nach dem Entfernen der Feinanteile Zuschlagsstoffe beigemengt werden.

9. Verfahren nach einem der Patentansprüche 1 bis 8, dadurch gekennzeichnet, dass unverbranntes Grobgut und magnetische Teile vor dem Vermischen mit dem zusätzlichen Waschwasser aus der Schlacke entfernt werden.

10. Verfahren nach einem der Patentansprüche 1 bis 9, dadurch gekennzeichnet, dass unverbranntes Grobgut und magnetische Teile vor dem Trocknen aus der Schlacke entfernt werden.

11. Schlackenreinigungs-Vorrichtung zur Durchführung des Verfahrens nach Patentanspruch 1 mit einer Metallabscheidung, einer Trocknungseinrichtung und einer Klassierungseinrichtung, dadurch gekennzeichnet, dass sie eine Wascheinheit (2) zur Vermischung der Schlacke mit Waschwasser, eine Trenneinrichtung (4) zur Abscheidung von Waschwasser und Schlamm von der Schlacke, eine Trocknungseinrichtung (7) zur Trocknung der Schlacke, eine Fraktioniereinheit (8) zur Fraktionierung der Schlacke in eine erste Klasse von Staub und einem Korn bis 2 mm und eine zweite Klasse von grösserem Korn, und mindestens einen Grobgut-Abscheider (16, 17) sowie mindestens eine Magnetabscheidevorrichtung (6) zur Abtrennung von magnetischen Stoffen aufweist, und alle Baugruppen über Fördereinrichtungen miteinander verbunden sind.

12. Schlackenreinigungs-Vorrichtung nach Patentanspruch 11, dadurch gekennzeichnet, dass ein Grobgut-Abscheider (16) und ein Magnetabscheider (20) vor der Wascheinheit (2) angeordnet sind, die Abtrenneinrichtung für das Waschwasser in und/oder direkt nach der Wascheinheit (2) angeordnet ist, und diese Abtrenneinrichtung (4) eine gemeinsame Baugruppe (22) mit der Fraktioniereinheit zur Abscheidung der Feinanteile der Schlacke bildet und anschliessend die Trocknungseinrichtung (7) angeordnet ist.

13. Schlackenreinigungs-Vorrichtung nach Patentanspruch 11 oder 12, dadurch gekennzeichnet, dass die Wascheinheit (2) ein Wasserbad mit einem Schwertwellenwäscher oder ein Trommelwäscher ist.

14. Schlackenreinigungs-Vorrichtung nach Patentanspruch 11, dadurch gekennzeichnet, dass die Trenneinrichtung (4) zur Abtrennung von Waschwasser und Schlamm aus einer Entwässerungsrinne oder einer Schubzentrifuge besteht.

15. Schlackenreinigungs-Vorrichtung nach Patentanspruch 11 oder 12, dadurch gekennzeichnet, dass die Trocknungseinrichtung (7) eine Trocknungstrommel mit einer Brenn- oder Glühvorrichtung ist.

16. Schlackenreinigungs-Vorrichtung nach Patentanspruch 11, dadurch gekennzeichnet, dass die Fraktioniereinheit (8) ein Vibrationssieb mit einer Maschenweite von maximal 2 mm und einer Absaugvorrichtung (15) ist.

17. Schlackenreinigungs-Vorrichtung nach Patentanspruch 11, dadurch gekennzeichnet, dass die Fraktioniereinheit (8) ein Windsichter ist.

18. Schlackenreinigungs-Vorrichtung nach Patentanspruch 11 oder 16, dadurch gekennzeichnet, dass die Trocknungseinrichtung (7) und die Fraktioniereinheit (8) in einer kombinierten Baugruppe zusammengefasst sind.

19. Schlackenreinigungs-Vorrichtung nach Patentanspruch 11 oder 12, dadurch gekennzeichnet, dass der Grobgut-Abscheider (16, 17) ein Sieb oder eine Rüttelrinne ist.

20. Verwendung der gemäss Patentanspruch 1 gereinigten Schlacke mit einer Körngrösse grösse als 2 mm als Baumaterial.

## Claims

1. Method of removing pollutants and contaminants from the slag of garbage and waste incinerators, wherein the slag after leaving the incinerator is quenched with water and then dried and the dust components are separated from the slag, characterized in that the slag, after quenching, is mixed with additional, approximately neutral washing water, pollutants and a portion of the fines are washed out of the slag, slag and washing water are separated from one another and the slag is dried to a water content of at most 20% and the remaining fines having a grain size of at most 2 mm are separated and removed from the slag.

2. Method according to patent claim 1, characterized in that the additional quantity of washing water mixed with the slag is at least three times the weight of the slag.

3. Method according to one of patent claims 1 or 2, characterized in that the additional washing water, which is mixed with the slag, is heated to at most 90°C.

4. Method according to one of patent claims 1 to 3, characterized in that solvents and/or binding agents are added to the additional washing water.

5. Method according to one of patent claims 1 to 4, characterized-in that first the uncombined washing water is separated from the slag and then the slag is dried in a drying process to the water content of at most 20%.

6. Method according to one of patent claims 1 to 5, characterized in that, during the drying process of the slag, unburnt particles and light solids are burnt or fired away.

7. Method according to one of patent claims 1 to 6, characterized in that the fines are removed from the slag simultaneously with and/or subsequent to drying.

8. Method according to one of patent claims 1 to 7, characterized in that loading materials are added to the slag after removal of the fines.

9. Method according to one of patent claims 1 to 8, characterized in that unburnt coarse material and magnetic components are removed from the slag prior to mixing with the additional washing water.

10. Method according to one of patent claims 1 to 9, characterized in that unburnt coarse material and magnetic components are removed from the slag prior to drying.

11. Slag purifying apparatus for effecting the method according to patent claim 1, having a metal separator, a drying device and a classifying device, characterized in that the apparatus comprises a washing unit (2) for mixing the slag with washing water, a separating device (4) for separating washing water and sludge from the slag, a drying device (7) for drying the slag, a fractionating unit (8) for fractionating the slag into a first class of dust and a grain up to 2 mm and a second class of a larger grain, and at least one coarse material separator (16, 17) as well as at least one magnet separator (6) for separating magnetic materials, and all of the structural components are connected to one another by conveyors.

12. Slag purifying apparatus according to patent claim 11, characterized in that a coarse material separator (16) and a magnet separator (20) are disposed upstream of the washing unit (2), the separating device for the washing water is disposed in and/or directly downstream of the washing unit (2), and said separating device (4) forms a joint structural component (22) with the fractionating unit for separating the fines of the slag and the drying device (7) is disposed downstream thereof.

13. Slag purifying apparatus according to patent claim 11 or 12, characterized in that the washing unit (2) is a water bath with a paddle mill type washer, or a drum washer.

14. Slag purifying apparatus according to patent claim 11, characterized in that the separating device (4) for separating washing water and sludge comprises a drainage channel or a push-type centrifuge.

15. Slag purifying apparatus according to patent claim 11 or 12, characterized in that the drying device (7) is a drying drum with a combustion or firing device.

16. Slag purifying apparatus according to patent claim 11, characterized in that the fractionating unit (8) is a vibrating screen with a mesh size of at most 2 mm and an extraction device (15).

17. Slag purifying apparatus according to patent claim 11, characterized in that the fractionating unit (8) is an air classifier.

18. Slag purifying apparatus according to patent claim 11 or 16, characterized in that the drying device (7) and the fractionating unit (8) are amalgamated in a combined structural component.

19. Slag purifying apparatus according to patent claim 11 or 12, characterized in that the coarse material separator (16, 17) is a screen or a vibrating chute.

20. Use as a construction material of the slag purified according to patent claim 1 and having a grain size greater than 2 mm.

## Revendications

1. Procédé d'élimination de substances nuisibles et d'impuretés à partir des scories de fours d'incinération d'immondices et de déchets, dans lequel les scories sont, après la sortie du four d'incinération, trempées avec de l'eau et ensuite séchées, les fractions de poussière étant séparées des scories, caractérisé en ce que les scories sont, après la trempe, mélangées à de l'eau de lavage supplémentaire approximativement neutre, en ce que des substances nuisibles et une partie des fractions fines sont extraites des scories par lavage, en ce que les scories et l'eau de lavage sont mutuellement séparées et en ce que les scories sont séchées à une teneur en eau d'au maximum 20 %, les fractions fines résiduaires ayant une dimension granulaire de 2 mm au maximum étant séparées des scories et éliminées.

2. Procédé suivant la revendication 1, caractérisé en ce que la quantité d'eau de lavage supplémentaire, mélangée aux scories, est d'au moins trois fois le poids des scories.

3. Procédé suivant l'une des revendications 1 et 2, caractérisé en ce que l'eau de lavage supplémentaire, qui est mélangée aux scories, est chauffée à 90°C au maximum.

4. Procédé suivant l'une des revendications 1 à 3, caractérisé en ce que des solvants et/ou des liants sont ajoutés à l'eau de lavage supplémentaire.

5. Procédé suivant l'une des revendications 1 à 4, caractérisé en ce que tout d'abord l'eau de lavage non fixée est séparée des scories et en ce qu'ensuite les scories sont séchées dans un processus de séchage à une teneur en eau de 20 % au maximum.

6. Procédé suivant l'une des revendications 1 à 5, caractérisé en ce que des petites particules et des particules légères non brûlées sont brûlées ou consumées pendant le processus de séchage des scories.

7. Procédé suivant l'une des revendications 1 à 6, caractérisé en ce que les fractions fines sont séparées des scories simultanément au séchage et/ou à la suite du séchage.

8. Procédé suivant l'une des revendications 1 à 7, caractérisé en ce que des granulats sont ajoutés aux scories après l'élimination des fractions fines.

9. Procédé suivant l'une des revendications 1 à 8, caractérisé en ce que de la matière grossière non brûlée et des particules magnétiques sont éliminées des scories avant le mélange avec l'eau de lavage supplémentaire.

10. Procédé suivant l'une des revendications 1 à 9, caractérisé en ce que de la matière grossière non brûlée et des particules magnétiques sont-éliminées des scories avant le séchage.

11. Dispositif d'épuration des scories pour la mise en oeuvre du procédé suivant la revendication 1, comprenant une séparation métallique, un dispositif de séchage et un dispositif de calibrage, caractérisé en ce qu'il présente une unité de lavage (2) pour mélanger de l'eau de lavage aux scories, un dispositif de séparation (4) pour séparer de l'eau de lavage et de la boue à partir des scories, un dispositif de séchage (7) pour sécher les scories, une unité de fractionnement (8) pour fractionner les scories en une première classe de poussières et en un grain allant jusqu'à 2 mm et en une deuxième classe de grains plus grands, et au moins un séparateur de matière grossière (16, 17) ainsi qu'au moins un dispositif de séparation magnétique (6) pour séparer des substances magnétiques, et en ce que tous les groupes constitutifs sont mutuellement reliés par l'intermédiaire de dispositifs de transport.

12. Dispositif d'épuration de scories suivant la revendication 11, caractérisé en ce qu'un séparateur de matière grossière (16) et un séparateur magnétique (20) sont agencés avant l'unité de lavage (2), en ce que le dispositif de séparation de l'eau de lavage est agencé dans l'unité de lavage (2) et/ou directement après elle, et en ce que ce dispositif de séparation (4) forme un groupe constitutif (22) commun à l'unité de fractionnement destinée à la séparation des fractions fines des scories et en ce que le dispositif de séchage (7) est agencé ensuite.

13. Dispositif d'épuration de scories suivant l'une des revendications 11 et 12, caractérisé en ce que l'unité de lavage (2) est un bain d'eau comportant un laveur à ondes en diagonale ou un laveur à tambour.

14. Dispositif d'épuration de scories suivant la revendication 11, caractérisé en ce que le dispositif de séparation (4) destiné à séparer l'eau de lavage et la boue est constitué d'une rigole de déshumidification ou d'une centrifugeuse à poussée.

15. Dispositif d'épuration de scories suivant l'une des revendications 11 et 12, caractérisé en ce que le dispositif de séchage (7) est un tambour de séchage comportant un dispositif de brûlage ou d'incandescence.

16. Dispositif d'épuration de scories suivant la revendication 11, caractérisé en ce que l'unité de fractionnement (8) est un tamis vibrant ayant une ouverture de maille de 2 mm au maximum et un dispositif d'aspiration (15).

17. Dispositif d'épuration de scories suivant la revendication 11, caractérisé en ce que l'unité de fractionnement (8) est un séparateur à vent.

18. Dispositif d'épuration de scories suivant l'une des revendications 11 et 16, caractérisé en ce que le dispositif de séchage (7) et l'unité de fractionnement (8) sont rassemblés en un groupe de construction combiné.

19. Dispositif d'épuration de scories suivant l'une des revendications 11 et 12, caractérisé en ce que le séparateur de matière grossière (16, 17) est un crible ou une rigole vibrante.

20. Utilisation des scories épurées suivant la revendication 1 et présentant une dimension granulaire supérieure à 2 mm, comme matériel de construction.
